# EUROPEAN PATENT APPLICATION

(11) **EP 2 429 206 A2**
(43) Date of publication of application: **14.03.2012**
(21) Application number: 11177806.4
(22) Date of filing: 17.08.2011
(51) Int. Cl.: H04N 13/04

(54) **Information display device, reproduction device, and stereoscopic image display device**

(30) Priority: 14.09.2010 JP 2010205127; 26.04.2011 JP 2011098420
(71) Applicant: Panasonic Corporation, Kadoma-shi Osaka 571-8501 (JP)
(72) Inventor: Hara, Yumi, Osaka-shi, Osaka, 540-6207 (JP)
(74) Representative: Pautex Schneider, Nicole Véronique

(57) **Abstract**

To provide an information display device to be included in a device outputting stereoscopic images in which images for the right and left eyes are arranged alternately in chronological order. The information display device includes a display unit which has light emitting units and which displays information other than the stereoscopic images using the light emitting units each of which alternates between a light-up state and a light-out state, the light-up state lasting for a predetermined period from a start of a light emission of the light emitting unit to an end of the light emission. Each of the light emitting units emits light so that the light-up state is included at least once during a shutter open period from when a shutter of eyeglasses used for viewing the stereoscopic images is opened to when the shutter is closed, the shutter being for one of the right and left eyes.

## Description

### BACKGROUND OF THE INVENTION

### (1) Field of the Invention

The present invention relates to an information display device, and particularly to displaying information which is viewed through 3D glasses.

### (2) Description of the Related Art

As examples of a device for displaying information, such as a counter value indicating a current playback point of a reproduction device, a vacuum fluorescent display (VFD), a light emitting diode (LED), and a liquid crystal display (LCD) are conventionally known.

Like a a fluorescent lamp, a VFD emits light as a result of a flow of electrons through a tube. The VFD is internally divided by grid lines, and lights up for each unit called a grid. A lighting cycle of the VFD is called a frame cycle.

For example, Japanese Unexamined Patent Application Publication No. 5-323900 (referred to as Patent Reference 1 hereafter) discloses an invention relating to a VFD device. The VFD device disclosed in Patent Reference 1 includes: a VFD; an anode driver and a grid driver which supply a display current to the VFD; a control circuit which supplies a control signal to the anode driver and the grid driver; an interface circuit which exchanges signals with an external source; a DC-DC converter (DC stands for direct current) which increase a low voltage to a predetermined voltage; a filament voltage supplying circuit which supplies a voltage to a filament; and a synchronous circuit which synchronizes the voltage supplied to the filament with a period for which one screen is displayed.

With the above configuration, the VFD device disclosed in Patent Reference 1 aims to prevent flicker (including instability, jitter, and weave) from occurring in the displayed information.

In recent years, three-dimensional (3D) glasses have been used for viewing 3D (also referred to as "stereoscopic" hereafter) images on TV. The 3D glasses include a shutter, which opens and closes, provided for each of right and left lenses corresponding to the right and left eyes.

Even when a user is not watching a TV screen, the shutter of the 3D glasses opens and closes as long as a pulse instructing the 3D glasses to open the shutter is received from the TV.

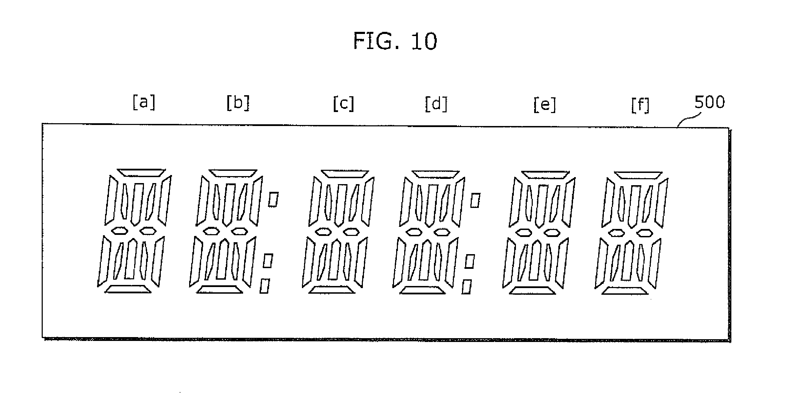

FIG. 10 is a diagram showing an example of a schematic configuration of a conventional VFD.

As shown in FIG. 10, a VFD 500 is divided into a plurality of blocks called grids. In FIG. 10, the grids are indicated by [a] to [f].

In the example shown in FIG. 10, the VFD 500 is divided into six grids [a] to [f].

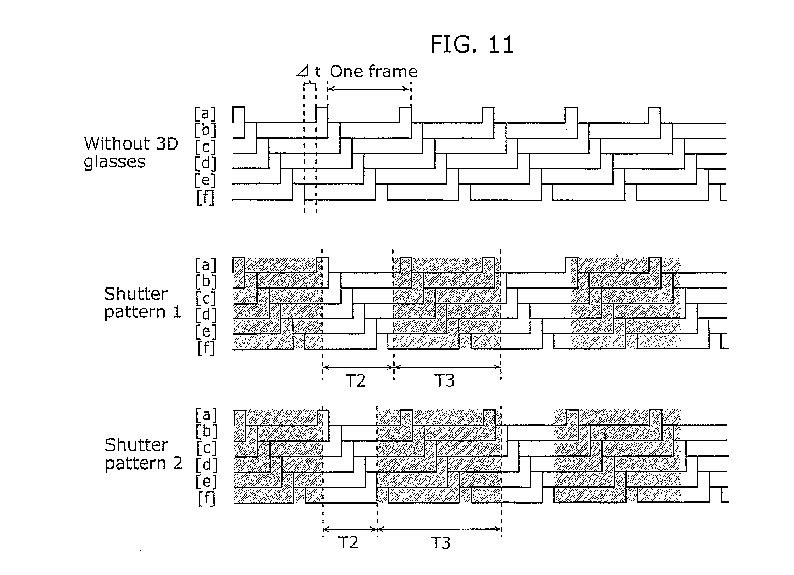

FIG. 11 is a diagram showing an example of a relationship between a lighting waveform generated by the conventional VFD 500 and an open-close cycle of the shutter of the 3D glasses.

In FIG. 11, a shaded area represents a period for which the shutter is closed. This period is referred to as a "closed period" or "shutter closed period" hereafter. Areas other than the shaded areas in FIG. 11 represent periods for which the shutter is open. A period for which the shutter is open is referred to as an "open period" or "shutter open period" hereafter.

FIG. 11 shows the open and closed periods of either one of the right and left shutters of the 3D glasses. The following describes either one of the right and left shutters of the 3D glasses, as representing both of the shutters, and explains about the relationship between the open-close cycle of this shutter and the lighting waveform generated by the conventional VFD 500.

As shown in FIG. 11, the grids [a], [b], [c], [d], [e], and [f] of the conventional VFD 500 light up one by one in this order.

For example, when a pulse of the grid [a] shown in FIG. 11 is HIGH, the grid [a] (see FIG. 10) lights up. Then, when the pulse of the grid [a] is LOW, the grid [a] lights out. Similarly, each of the other grids [b] to [f] lights up and out.

In this way, the grids [a] to [f] light up one by one in order. These repetitive operations makes it look to the user as if the grids [a] to [f] light up all together at the same time.

In the case where the VFD is driven using a common display driver, the length of one frame cycle is represented by a total width of pulses, the number of pulses being equal to the number increased by one with respect to the number of grids of the VFD.

To be more specific, as shown in the upper diagram in FIG. 11, after all the grids [a] to [f] lighted up one by one, there is a period indicated by "Δt" during which all the grids light out. The period Δt is equal in length to a period during which one grid lights up. This period corresponding to the light-up of one grid is referred to as an "individual lighting period" hereafter. Thus, as mentioned above, the length of one frame cycle is represented by the total width of the pulses, the number of pulses being equal to the number increased by one with respect to the number of grids of the VFD.

Since the VFD 500 includes the six grids as shown in FIG. 10, the length of one frame cycle is obtained by multiplying the length of the individual lighting period by seven.

Accordingly, when watching, without the 3D glasses on, the VFD 500 in which each of the grids lights up cyclically, the user can see with both eyes that all the grids are emitting light.

### SUMMARY OF THE INVENTION

The upper diagram in FIG. 11 shows a lighting waveform generated by the VFD 500 in the case where the user is not wearing the 3D glasses. When the user watches, without the 3D glasses on, the VFD 500 having the grids lighting up one by one, flicker resulting from a shutter cycle of the 3D glasses does not occur.

With the 3D glasses on, the user can see the light emission of the VFD 500 only in the shutter open periods because the shutter is alternately opened and closed.

In this case, whether the light emissions of all the grids can be seen or how clearly the light emissions can be seen varies for each open period. As a result, flicker occurs on the VFD 500.

Even when a frame frequency of the VFD 500 is constant, variations in a proportion of the shutter open period may have an influence on flicker on the VFD 500. Here, supposing that the open period and the closed period are represented by T2 and T3, respectively, as shown in FIG. 11, the proportion of the open period refers to a proportion of the open period T2 in a sum of the open period T2 and the closed period T3.

The middle and lower diagrams in FIG. 11 show two different shutter patterns having different proportions of the open period.

The middle diagram in FIG. 11 shows a relationship between the open-close cycle of the shutter and the lighting waveform generated by the conventional VFD 500 in the case where the proportion of the open period is 40%. The pattern shown in this diagram is referred to as a shutter pattern 1.

In the shutter pattern 1, at least one of the six grids is not in a light-up state in the open period T2.

For example, during the first open period T2, each of the grids [b] to [f] is in the light-up state only once. The grid [a] starts emitting light before this open period T2 starts, and emits light next time in the closed period T3. That is, the light-up state of the grid [a] is not fully included in the open period T2 in the shutter pattern 1.

To be more specific, although the grid [a] actually emits light in the open period T2, the open period T2 starts only after the grid [a] started emitting light. On account of this, the amount of light emitted by the grid [a] in the open period T2 is relatively small.

As a result of such an operation of the VFD 500, it seems to the user that at least one of the grids alternately increases and decreases in brightness. This looks to the user that a displayed indication is flickering.

The lower diagram in FIG. 11 shows a relationship between the open-close cycle of the shutter and the lighting waveform generated by the conventional VFD 500 in the case where the proportion of the open period is 30%. The pattern shown in the diagram is referred to as a shutter pattern 2.

Also in the shutter pattern 2, at least one of the six grids is not in the light-up state in the open period T2.

To be more specific, during one specific open period T2, at least one of the six grids does not emit light at all.

In the shutter pattern 2, the grid [f] does not emit light at all during the first open period T2, and the grid [a] does not emit light at all during the next open period T2. That is, the grid which does not emit light is different for each open period T2. For this reason, it looks to the user as if the indication displayed on the VFD 500 is wavering.

As described above, the conventional technology has a problem that flicker occurs in the vision of the user watching the indication displayed on the VFD through the 3D glasses, depending on the frame frequency of the VFD.

Also, the same problem may occur to a device, other than a VFD, which displays information using a plurality of light emitting units each of which alternates between the light-up state and the light-out state.

In view of the stated problem, the present invention has an object to provide an information display device capable of preventing flicker from occurring in the vision seen through the 3D glasses.

In order to achieve the above object, the information display device according to an aspect of the present invention is an information display device to be included in a device which outputs stereoscopic images in which an image for the right eye and an image for the left eye are arranged alternately in chronological order, the information display device including a display unit which includes a plurality of light emitting units, and displays information other than the stereoscopic images using the light emitting units each of which alternates between a light-up state and a light-out state, the light-up state lasting for a predetermined period from a start of a light emission of the light emitting unit to an end of the light emission, the light-out state lasting from the end of the light emission to a start of a next light emission, wherein each of the light emitting units emits light so that the light-up state is included at least once during a shutter open period from when a shutter included in eyeglasses used for viewing the stereoscopic images is opened to when the shutter is closed, the shutter being for one of the right and left eyes.

With this configuration, each of the light emitting units included in the display unit is in the light-up state at least once during the shutter open period. This prevents flicker from occurring in the vision in the right or left eye corresponding to the current shutter of the eyeglasses worn by the user. Flicker occurs when, for example, information such as characters displayed on the display unit looks like jittering or wavering to the user with the eyeglasses on.

For example, with this configuration, when the open periods of the right and left shutters are identical in length, flicker is prevented from occurring in the visions in both eyes of the user.

Also, in the information display device according to an aspect of the present invention, the light emitting units may be arranged in a row in the display unit, and each of the light emitting units may emit light, according to a light-emission pattern cycle of the light emitting units, so that the light-up state is included at least once during the shutter open period, the light-emission pattern cycle being shorter than the shutter open period and including alternations between the light-up state and the light-out state performed by the light emitting units one by one in order from the light emitting unit located at one end of the row to the light emitting unit located at an other end of the row.

With this configuration, flicker is prevented from occurring on the information display device which displays the information using the light emitting units arranged, for example, in a row in a horizontal direction. Also, according to a practical method whereby the light-emission pattern cycle of the light emitting units is set shorter than the shutter open period, an appropriate light emission period can be ensured for each of the light emitting units during the shutter open period.

Moreover, the information display device according to an aspect of the present invention may further include an obtaining unit which obtains period information indicating a length of the shutter open period, wherein each of the light emitting units may emit light so that the light-up state is included at least once during the shutter open period indicated in the period information obtained by the obtaining unit.

With this configuration, each of the light emitting units executes a light emission operation according to the shutter open period. For example, even when the shutter open period is set shorter via a setting change made by the user, the information display device in the present aspect is capable of adjusting the light emission cycle for each of the light emitting units in accordance with the changed length of the shutter open period. Accordingly, after the length of the shutter open period is changed, flicker is also prevented from occurring in the vision seen via the shutter.

Furthermore, the reproduction device according to an aspect of the present invention is a reproduction device which reproduces a stereoscopic image, the reproduction device including: the information display device according to one of the above aspects; and an image output unit which outputs a stereoscopic image signal indicating the stereoscopic image, to a stereoscopic image display device connected to the reproduction device.

Also, the stereoscopic image display device according to an aspect of the present invention is a stereoscopic image display device including: the information display device according to one of the above aspects; a receiving unit which receives a stereoscopic image signal indicating the stereoscopic image; and an image display unit which displays the stereoscopic image indicated by the stereoscopic image signal received by the receiving unit.

As described, the present invention can be implemented as a device which outputs stereoscopic images and which includes the information display device in one of the above aspects.

Also, the present invention can be implemented as an information display method including the characteristic processes executed by the information display device in one of the above aspects. Moreover, the present invention can be implemented as a computer program causing a computer to execute the characteristic processes included in the information display method, or as a recording medium having the computer program recorded thereon. Furthermore, the computer program can be distributed via via a transmission medium such as the Internet or via a recording medium such as a digital versatile disc (DVD).

Moreover, the present invention can be implemented as an integrated circuit including some or all of the components of the information display device in one of the above aspects

The present invention can provide an information display device capable of preventing flicker from occurring in the vision seen through 3D glasses, and can also provide a reproduction device and a stereoscopic image display device each including the information display device.

### FURTHER INFORMATION ABOUT TECHNICAL BACKGROUND TO THIS APPLICATION

The disclosure of Japanese Patent Application No. 2010-205127 filed on September 14, 2010 including specification, drawings and claims is incorporated herein by reference in its entirety.

The disclosure of Japanese Patent Application No. 2011-098420 filed on April 26, 2011 including specification, drawings and claims is incorporated herein by reference in its entirety.

### BRIEF DESCRIPTION OF THE DRAWINGS

These and other objects, advantages and features of the invention will become apparent from the following description thereof taken in conjunction with the accompanying drawings that illustrate a specific embodiment of the invention. In the Drawings:
FIG. 1 is a diagram showing a basic configuration of an information display device in an embodiment according to the present invention;
FIG. 2 is a diagram showing a schematic configuration of a stereoscopic image viewing system including the information display device in the embodiment according to the present invention;
FIG. 3 is a diagram showing a basic hardware configuration of a reproduction device in the embodiment according to the present invention;
FIG. 4 is a diagram showing a schematic configuration of a vacuum fluorescent display (VFD) included in the information display device in the embodiment according to the present invention;
FIG. 5 is a diagram showing an example of a relationship between a lighting waveform generated by the VFD and an open-close cycle of a shutter of 3D glasses, in the embodiment according to the present invention;
FIG. 6 is a diagram showing a basic operation of the information display device in the embodiment according to the present invention;
FIG. 7 is a diagram showing another example of a configuration of the information display device in the embodiment according to the present invention;
FIG. 8 is a diagram showing an example of an external view of a TV including the information display device of the embodiment according to the present invention;
FIG. 9 is a diagram showing a basic configuration of the TV shown in FIG. 8;
FIG. 10 is a diagram showing an example of a schematic configuration of a conventional VFD; and
FIG. 11 is a diagram showing an example of a relationship between a lighting waveform generated by the conventional VFD and an open-close cycle of a shutter of 3D glasses.

### DESCRIPTION OF THE PREFERRED EMBODIMENT

The following is a description of an embodiment according to the present invention, with reference to the drawings.

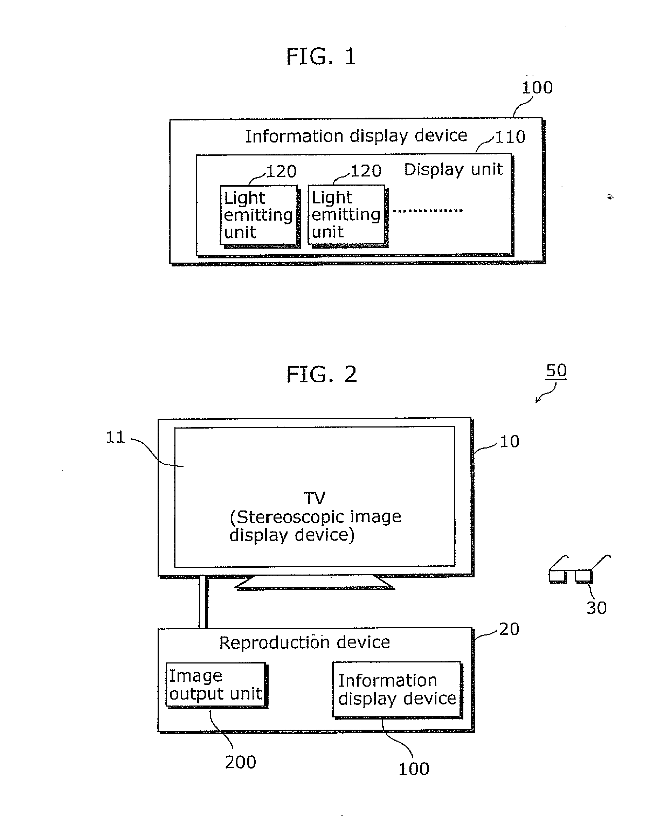

FIG. 1 is a diagram showing a basic configuration of an information display device 100 in the embodiment according to the present invention.

The information display device 100 in the present embodiment is included in a device which outputs stereoscopic images arranged alternately for the right and left eyes in chronological order. As shown in FIG. 1, the information display device 100 includes a display unit 110 having a plurality of light emitting units 120.

Each of the light emitting units 120 alternates between a light-up state and a light-out state. The light-up state refers to a state which lasts for a predetermined period from a start of a light emission to an end of the light emission. The light-out state refers to a state which lasts from the end of the light emission to a start of a next light emission. With this, the display unit 110 displays information other than the aforementioned stereoscopic images.

To be more specific, the information display device 100 is not used for displaying the stereoscopic images. The information display device 100 is included in a reproduction device or the like, and displays only the information other than the stereoscopic images, such as a counter value indicating a current playback point in the stereoscopic images.

Here, a pair of 3D glasses 30, including a shutter for the right eye and a shutter for the left eye, is used for viewing the stereoscopic images. Each of the light emitting units 120 in the present embodiment emits light so that the light-up state is included at least once during a shutter open period from when the shutter included in the 3D glasses 30 is opened to when the shutter is closed, the shutter being for one of the right and left eyes.

As a result of such a light emission operation performed by each of the light emitting units 120, flicker can be prevented from occurring in the vision seen via the shutter.

The following describes an application example and a specific example of the information display device 100 in the present embodiment, with reference to FIGs. 2 to 9.

FIG. 2 is a diagram showing a schematic configuration of a stereoscopic image viewing system 50 including the information display device 100 in the embodiment according to the present invention.

The stereoscopic image viewing system 50 includes a TV 10 serving as a stereoscopic image display device, a reproduction device 20 for reproducing a stereoscopic image, and the 3D glasses 30.

The reproduction device 20 is connected to the TV 10. The TV 10 displays, on an image display unit 11, the stereoscopic image based on a stereoscopic image signal received from an image output unit 200 included in the reproduction device 20. It should be noted that the image display unit 11 is implemented by a display device, such as a liquid crystal panel or a plasma display panel (PDP).

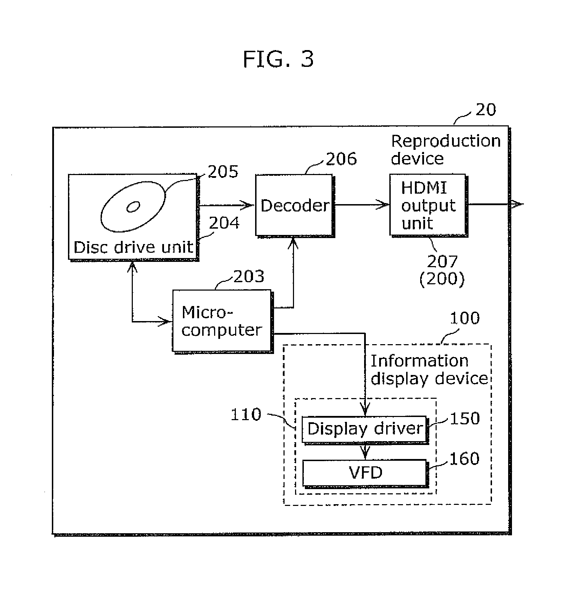

The reproduction device 20 includes the information display device 100 for displaying, for example, a counter value of content data being reproduced. In the present embodiment, the information display device 100 includes a VFD. The details of the information display device 100 are described later with reference to FIGs. 3 to 6.

The 3D glasses 30 include the shutters for the right and left eyes. The stereoscopic image signal according to a stereoscopic imaging method using the 3D glasses 30 refers to image signals arranged alternately for the right and left eyes in chronological order.

When outputting the stereoscopic image, the TV 10 sends, to the 3D glasses 30, information on timing of switching between the right and left shutters and information on a proportion of the shutter open period.

The information on the proportion of the shutter open period refers to information defining the shutter open period of the 3D glasses 30. When the proportion of the shutter open period is 40% as in the case of the shutter pattern 1 shown in FIG. 11, the proportion between the open period and the closed period is expressed as 40 : 60.

Similarly, when the proportion of the shutter open period is 30% as in the case of the shutter pattern 2 shown in FIG. 11, the proportion between the open period and the closed period is expressed as 30 : 70.

With the 3D glasses 30 on, the user watches not only the image outputted from the TV 10, i.e., the image displayed on the image display unit 11, but also the information displayed on the information display device 100.

FIG. 3 is a diagram showing a basic hardware configuration of the reproduction device 20 in the embodiment according to the present invention_{∘}

The reproduction device 20 includes a microcomputer 203, a disc drive unit 204, a decoder 206, a high-definition multimedia interface (HDMI) output unit 207, and the information display device 100.

The microcomputer 203 controls the reproduction device 20. Under the control of the microcomputer 203, the disc drive unit 204 reads information from a disc 205. For example, stereoscopic image content is recorded on the disc 205, and the disc drive unit 204 reads out this stereoscopic image content.

The decoder 206 decodes the data read out by the disc drive unit 204. When the disc drive unit 204 reads out the stereoscopic image content, the decoder 206 decodes this stereoscopic image content to generate a stereoscopic image signal and then outputs the generated stereoscopic image signal.

The HDMI output unit 207 is a piece of hardware having the function as the image output unit 200 in the reproduction device 20. The HDMI output unit 207 outputs, to an external device, the information received from the decoder 206.

Receiving the stereoscopic image signal from the decoder 206, the HDMI output unit 207 outputs this stereoscopic image signal to the external device. To be more specific, in the present embodiment, the HDMI output unit 207 outputs the stereoscopic image signal to the TV 10 which is the stereoscopic image display device connected to the reproduction device 20.

The information display device 100 includes a display driver 150 and a VFD 160 which serve the function of the display unit 110.

The microcomputer 203 determines display specifications, on the basis of information from the disc drive unit 204, initial setting information of the reproduction device 20, and mode information of the reproduction device 20. The microcomputer 203 sends the determined display specifications to the display driver 150.

The information from the disc drive unit 204 refers to information displayed by the VFD 160, corresponding to the content of the disc 205 which is being reproduced. Examples of the information from the disc drive unit 204 include time information, shown as a counter value, indicating a time of day at which the content is being reproduced.

The initial setting information of the reproduction device 20 includes: information indicating a relationship between pins of the display driver 150 and the VFD 160; and information on brightness of the VFD 160.

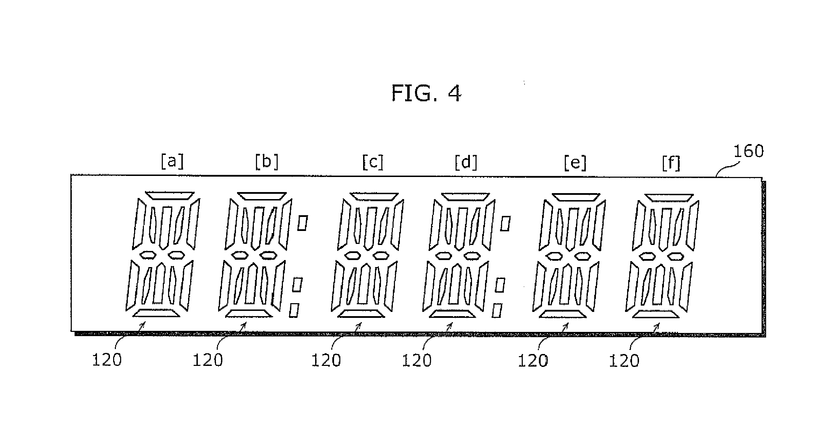

FIG. 4 is a diagram showing a schematic configuration of the VFD 160 included in the information display device 100 in the embodiment according to the present invention.

The VFD 160 in the present embodiment includes six grids [a] to [f] as the light emitting units 120.

According to the initial setting information and the operational status of the reproduction device 20, the microcomputer 203 determines a grid, from among the six grids, which is to be lighted up.

Moreover, the microcomputer 203 determines a cell which is to be lighted up in the determined grid. Here, the cell is a phosphor included in the grid. In the present embodiment, each of the grids is a 14-segment type grid having 14 cells.

After determining the grid and cell which are to be lighted up, the microcomputer 203 sends the information on these determinations to the display driver 150. On the basis of the information received from the microcomputer 203, the display driver 150 drives the VFD 160 to emit light.

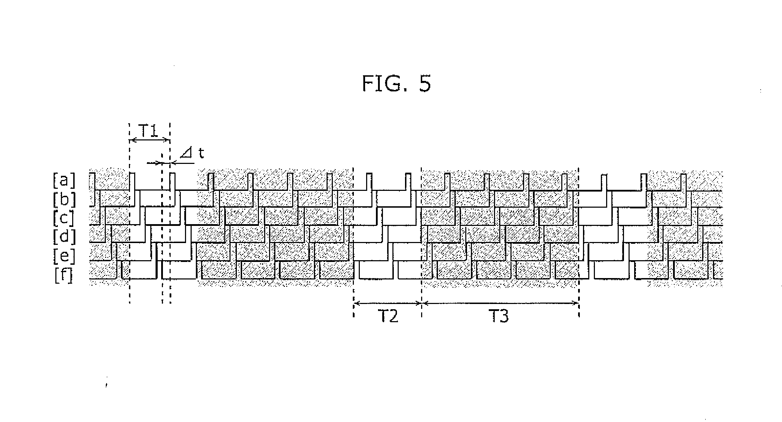

FIG. 5 is a diagram showing an example of a relationship between a lighting waveform generated by the VFD 160 and an open-close cycle of a shutter of the 3D glasses 30, in the embodiment according to the present invention.

Pulses respectively corresponding to the six grids [a] to [f] shown in FIG. 5 are at a frequency of 570 Hz, and pulse widths (i.e., periods of the light-up states) of these grids are the same.

For example, during a period when the pulse of the grid [a] in FIG. 5 is HIGH, the grid [a] shown in FIG. 4 emits light. That is, the grid [a] is in the light-up state. Also, during a period when the pulse of the grid [a] in FIG. 5 is LOW, the grid [a] shown in FIG. 4 does not emit light. That is, the grid [a] is in the light-out state.

In FIG. 5, shaded areas represent the closed periods for which the shutter is closed. Areas other than the shaded areas in FIG. 5 represent the open periods for which the shutter is open.

FIG. 5 shows the open and closed periods of either one of the right and left shutters of the 3D glasses 30. The following describes either one of the right and left shutters of the 3D glasses 30, as representing both of the shutters, and explains about the relationship between the open-close cycle of this shutter and the lighting waveform generated by the VFD 160.

Opening and closing of the right and left shutters of the 3D glasses 30 are controlled by a synchronization signal sent from the HDMI output unit 207 to the TV 10. More specifically, the right and left shutters of the 3D glasses 30 are opened and closed in synchronization with the stereoscopic images displayed on the TV 10 alternately for the right and left eyes.

In the VFD 160, the grids [a], [b], [c], [d], [e], and [f] emit light one by one in this order.

Here, these grids [a] to [f] are arranged in a row in the display unit 110. Thus, alternation between the light-up state and the light-out state is performed by the grids [a] to [f] one by one from the grid located at one end of the row to the grid located at the other end. The information display device 100 operates according to such a light emission pattern.

As described above, in the case where the VFD is driven using a common display driver, the length of one frame cycle is represented by a total width of pulses, the number of pulses being equal to the number increased by one with respect to the number of grids of the VFD. That is, one frame cycle is expressed by (the number of grids of the VFD + 1) * (one pulse width).

To be more specific, in the case of the VFD 160 in the present embodiment as shown in FIG. 5, after all the grids [a] to [f] lighted up one by one, there is a period indicated by "Δt" during which all the grids light out. The period Δt is equal in length to a period during which one grid lights up, that is, a period corresponding to the aforementioned pulse width.

Thus, one frame cycle T1 is represented by a total width of seven pulses, the number of pulses being calculated by increasing the number of grids of the VFD 160 by one.

The frame cycle T1 is defined as the reciprocal of a frame frequency. In the present embodiment, the frame frequency is 570 Hz which is identical to the pulse frequency mentioned above. Thus, T1 = (1/570) seconds.

In this way, the display driver 150 drives the grids [a] to [f] of the VFD 160 to emit lights, according to the information received from the microcomputer 203. Following an instruction from the display driver 150, the VFD 160 displays information using the light emissions of these grids.

Each of the grids [a] to [f] alternates between the light-up state and the light-out state in the frame cycle T1.

Here, without the 3D glasses 30 on, the user can see the light emissions from all the grids [a] to [f] with both eyes.

However, with the 3D glasses 30 on, the user can see the light emission of the VFD 160 only in the shutter open periods because the shutter is alternately opened and closed.

The frame cycle T1 of the VFD 160 is determined from the number of grids included in the VFD 160 and the output pulse width of the display driver 150.

In the present embodiment, the frame cycle T1 of the VFD 160 is set shorter than the shutter open period of the 3D glasses 30.

The frame cycle of the VFD 160 is explained. This frame cycle refers to a length of one frame cycle represented by a total width of pulses the number of which is equal to the number increased by one with respect to the number of grids of the VFD 160. In FIG. 5, the frame cycle is indicated by T1.

Next, the shutter open period of the 3D glasses 30 is explained. This shutter open period refers to a period during which the shutter is opened and, more specifically, a period from when the shutter is opened to when the shutter is closed. In FIG. 5, the shutter open period is indicated by T2.

The shutter closed period of the 3D glasses 30 refers to a period during which the shutter is closed and, more specifically, a period other than the open period. In FIG. 5, the shutter closed period is indicated by T3.

The following describes an operation performed by the reproduction device 20 in the present embodiment. When receiving an instruction from the microcomputer 203 to instruct the VFD 160 to display information, the display driver 150 instructs the VFD 160 to display the information.

In the display driver 150, the width of pulse to be provided to the grids is set such that the frame frequency of the VFD 160 is at 570 Hz. Therefore, the frame frequency of the VFD 160 is 570 Hz.

The shutter open period of the 3D glasses 30 is determined from the frequency at which the shutter is opened (referred to as the shutter open frequency) and from the proportion of the shutter open period. It should be noted that the shutter open frequency and proportion of the shutter open period of the 3D glasses 30 are determined depending on the content currently being reproduced or the user settings in the reproduction device 20 or in the TV 10.

In the present embodiment, for example, the shutter open frequency of the 3D glasses 30 is 120 Hz, and the proportion of the shutter open period of the 3D glasses 30 is 30%.

Hence, the shutter is opened every 1/120 seconds and then is closed at the conclusion of an elapsed period of time corresponding to 30% of 1/120 seconds. Therefore, in this case, the shutter open period is 1/400 seconds.

In the present embodiment, the frame cycle T1 is 1/570 seconds and the shutter open period T2 is 1/400 seconds. Thus, a relationship is expressed as T1 < T2.

As shown in FIG. 5, each of the grids [a] to [f] is in the light-up state at least once during the open period T2.

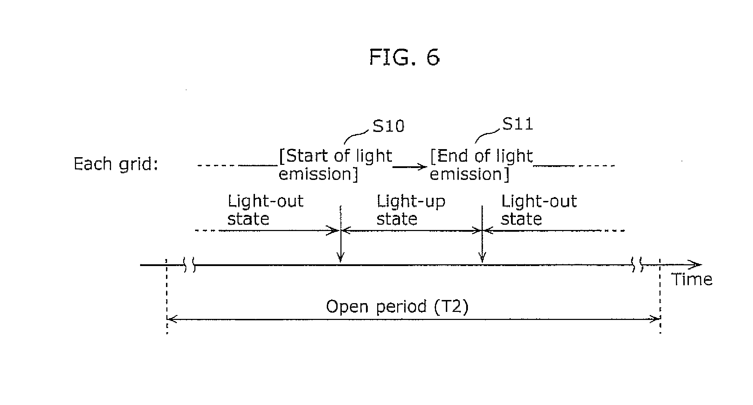

FIG. 6 is a diagram showing a basic operation of the information display device 100 in the embodiment according to the present invention.

As shown in FIG. 6, each of the grids [a] to [f] starts emitting light during the open period T2 (S10). Then, during this open period T2, the grid stops emitting light at the conclusion of a predetermined elapsed period after the start of the light emission (S11).

More specifically, the grids [a] to [f] switch from the light-out state to the light-up state one by one, in order from [a] to [f], as shown in FIG. 5.

It should be noted that when the phrase "during the open period T2" is used, the open period T2 refers to a duration which starts after the shutter starts opening and which ends before the current open shutter is completely closed.

In this way, each of the light emitting units 120, namely, the grids [a] to [f], of the information display device 100 in the present embodiment is in the light-up state at least once during the shutter open period T2 of the 3D glasses 30. Here, the shutter open period T2 is synchronized with the stereoscopic image received from the HDMI output unit 207 to be displayed on the TV 10.

Thus, the information display device 100 in the present embodiment allows the user to appropriately see the light emissions from all of the light emitting units 120 while the shutter of the 3D glasses 30 is opened. On this account, flicker is prevented from occurring when the user watches the information display device 100 through the 3D glasses 30.

For example, even when the light emission varies for each of the grids [a] to [f] as a result of an increase in the frame frequency of the VFD 160, the variations are less prone to being noticed and thus the flicker problem is unlikely to occur.

Also, for example, in the case where the open periods of the right and left shutters of the 3D glasses 30 are identical in length, flicker is prevented from occurring in the visions in the both eyes of the user.

When the open periods of the right and left shutters are different from each other, the frame cycle T1 is set shorter than the open period which is shorter than the other. Accordingly, flicker is prevented from occurring in the visions in the both eyes of the user.

Moreover, according to a change in the shutter open period of the 3D glasses 30, the information display device 100 may change the light emission operation for each of the light emitting units 120.

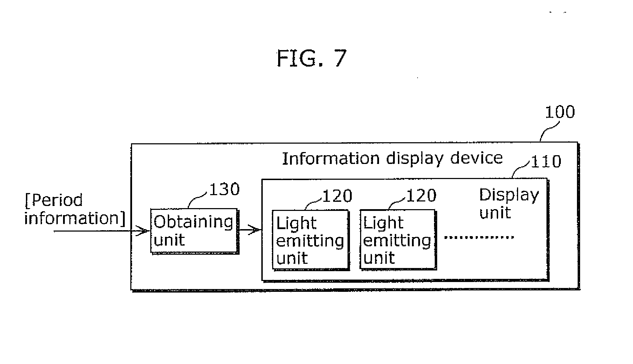

FIG. 7 is a diagram showing another example of a configuration of the information display device 100 in the embodiment according to the present invention.

The information display device 100 shown in FIG. 7 includes an obtaining unit 130. The obtaining unit 130 obtains period information indicating a length of the shutter open period of the 3D glasses 30.

In this case, each of the light emitting units 120 emits light so that the light-up state is included at least once during the shutter open period indicated in the period information obtained by the obtaining unit 130.

For example, suppose that the shutter open period T2 is reduced to be shorter than the frame cycle T1 via a change made by the user to the setting of the proportion of the shutter open period.

In this case, the information display device 100 shown in FIG. 7 adjusts the frame cycle T1 to be shorter than the changed open period T2. As a result, even when the length of the open period T2 is changed, flicker can be prevented from occurring in the vision seen via the shutter.

That is to say, the information display device 100 shown in FIG. 7 can adaptively change the frame cycle (i.e., the frame frequency) according to the change made in the shutter open period of the 3D glasses 30.

It should be noted that the obtaining unit 130 may obtain the period information when the setting related to the shutter open period T2 is changed. Alternatively, the period information may be obtained at regular time intervals.

When a value obtained by subtracting the current frame cycle T1 from the changed open period T2 is equal to or smaller than a predetermined value which is 0 or greater, the frame cycle T1 may be adjusted so that this resultant value of the subtraction is greater than the predetermined value.

Moreover, a series of these processes (obtaining the period information by the obtaining unit 130 and changing the frame cycle based on the obtained period information) may be automatically executed without requiring the user to perform any operation. In either one of these processes, the user may be asked whether to approve the execution or about the amount of change to be made to the frame cycle.

In the present embodiment, the information display device 100 is included in the reproduction device 20. However, the information display device 100 may be included in a different type of device. For example, the TV 10 may include the information display device 100.

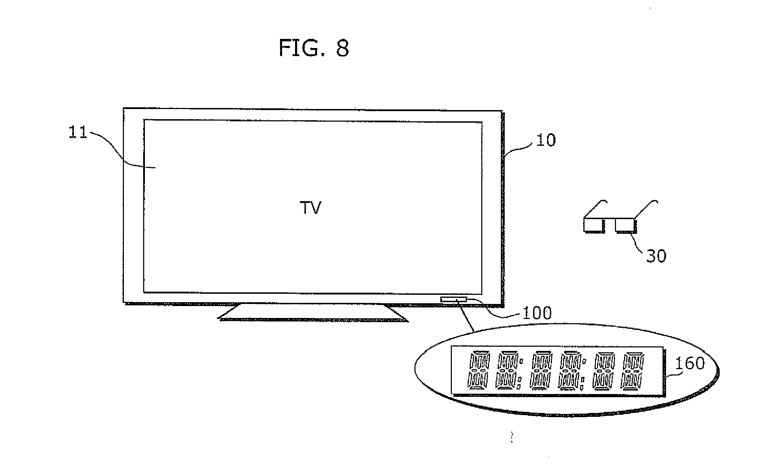

FIG. 8 is a diagram showing an example of an external view of the TV 10 including the information display device 100 of the present embodiment.

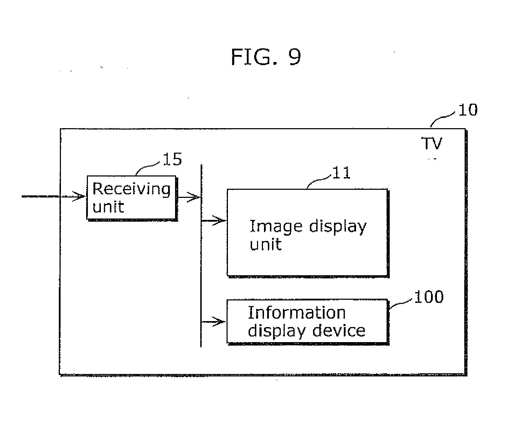

FIG. 9 is a diagram showing a basic configuration of the TV 10 shown in FIG. 8.

As shown in FIG. 8, the information display device 100 is built in the TV 10 in such a manner, for example, that the VFD 160 is located below the image display unit 11.

In addition to the image display unit 11 and the information display device 100, the TV 10 includes a receiving unit 15 which receives a stereoscopic image signal.

The receiving unit 15 receives the stereoscopic image signal from, for example, the reproduction device 20. Also, via an antenna which is not illustrated, the receiving unit 15 is capable of receiving the stereoscopic image signal transmitted via broadcasting.

The display unit 110 having the VFD 160 in the information display device 100 displays, for example, a number string indicating the current time of day or a character string indicating that the stereoscopic image is being displayed.

Also, in the case of receiving the stereoscopic image signal from the reproduction device 20 via the receiving unit 15, the information display device 100 may obtain information on the stereoscopic image signal from the reproduction device 20 and may display the obtained information.

It should be noted that the information display device 100 displays the various kinds of information described above according to, for example, an instruction from a control unit (not illustrated) of the TV 10.

When the information display device 100 is arranged near the screen, i.e., the image display unit 11, which displays the stereoscopic image as in the present example, it is highly likely that a view field of the user watching the stereoscopic image through the 3D glasses 30 includes the information displayed by the information display device 100.

As described above, each of the light emitting units 120 of the information display device 100 in the present embodiment emits light so that the light-up state is included at least once during the shutter open period of the 3D glasses 30.

On account of this, flicker is prevented from occurring on the information display device 100 and, therefore, the information displayed by the information display device 100 does not interfere with viewing of the stereoscopic image. Moreover, the information display device 100 can provide useful information to the user who is viewing the stereoscopic image.

Although only an exemplary embodiment of this invention has been described in detail above, those skilled in the art will readily appreciate that many modifications are possible in the exemplary embodiment without materially departing from the novel teachings and advantages of this invention. Accordingly, all such modifications are intended to be included within the scope of this invention.

For example, in the above embodiment, the frame frequency of the VFD 160 is 570 Hz, the shutter open frequency of the 3D glasses 30 is 120 Hz, and the proportion of the shutter open period is 30%.

However, the frame frequency of the VFD 160, the frequency for the shutter switching of the 3D glasses 30, and the proportion of the shutter open period are not limited to the above values.

These values can be any values as long as the values satisfy the condition that each of the light emitting units 120, namely, the grids [a] to [f], emits light so that the light-up state is included at least once during the open period of the shutter which is for one of the right and left eyes.

The number of grids included in the VFD 160 is not limited to six. Also, the number of segments included in one grid is not limited to 14.

Moreover, a display device included as the display unit 110 in the information display device 100 is not limited to the VFD. For example, a display device including an organic electro-luminescence (EL) as the light emitting unit 120 may be used as the display unit 110.

In the case of a device displaying information using light emitting units each of which alternates between the light-up state and the light-out state, the same problem (i.e., the flicker problem in the vision seen through 3D glasses) may occur.

However, the information display device 100 of the present embodiment can operate according to the frame cycle T1 shorter than the open period T2 as described above. Therefore, regardless of a type of the display device (i.e., a type of the light emitting unit 120), flicker can be prevented.

In the reproduction device 20 of the present embodiment, the disc drive unit 204 reads out, from the disc 205, the stereoscopic image content which is to be reproduced. However, the stereoscopic image content may be read out from a different type of recording medium. More specifically, the stereoscopic image content to be reproduced is read out from a hard disk drive (HDD) or a memory card connected to the reproduction device 20.

Also in the reproduction device 20 of the present embodiment, the information corresponding to the content reproduced from the disc 205 is read by the disc drive unit 204 from the disc 205 as the information to be displayed by the VFD 160.

To be more specific, in the case of the reproduction device 20 of the present embodiment, the time information (i.e., the counter value) indicating a time of day at which the content is being reproduced is displayed by the VFD 160, as the information corresponding to the content.

However, the information displayed by the VFD 160 is not limited to this, and may be clock information indicating the current time of day. In other words, the information displayed by the VFD 160 may be any kind of information as long as the present information is other than the stereoscopic image being displayed.

Another example of the information to be displayed by the VFD 160 is a character string such as "PLAY" indicating that some kind of content is being reproduced.

In the above embodiment, the reproduction device 20 includes the HDMI output unit 207 as an output unit (i.e., the image output unit) which outputs the stereoscopic image signal to the TV 10. However, the output unit which outputs the signal from the reproduction device 20 to the TV 10 is not limited to this, and may be a different type of output unit or output terminal.

In the above embodiment, the reproduction device 20 and the TV 10 have been described as examples of the devices including the information display device 100. However, the information display device 100 may be included in a different kind of device, such as a set top box which receives a stereoscopic image signal via a communication network and outputs the stereoscopic image signal to a stereoscopic image display device.

### INDUSTRIAL APPLICABILITY

The present invention can provide an information display device capable of preventing flicker from occurring in the vision seen through 3D glasses, and can also provide a reproduction device and a stereoscopic image display device each including the information display device. Thus, the present invention is useful as, for example, a fixed recorder, a fixed player, a fixed theater, a fixed set top box, and an information display device included in these.

## Claims

1. An information display device to be included in a device which outputs stereoscopic images in which an image for the right eye and an image for the left eye are arranged alternately in chronological order, said information display device comprising
a display unit which includes a plurality of light emitting units, and is configured to display information other than the stereoscopic images using said light emitting units each of which is configured to alternate between a light-up state and a light-out state, the light-up state lasting for a predetermined period from a start of a light emission of said light emitting unit to an end of the light emission, the light-out state lasting from the end of the light emission to a start of a next light emission,
wherein each of said light emitting units is configured to emit light so that the light-up state is included at least once during a shutter open period from when a shutter included in eyeglasses used for viewing the stereoscopic images is opened to when the shutter is closed, the shutter being for one of the right and left eyes.

2. The information display device according to Claim 1,
wherein said light emitting units are arranged in a row in said display unit, and
each of said light emitting units is configured to emit light, according to a light-emission pattern cycle of said light emitting units, so that the light-up state is included at least once during the shutter open period, the light-emission pattern cycle being shorter than the shutter open period and including alternations between the light-up state and the light-out state performed by said light emitting units one by one in order from said light emitting unit located at one end of the row to said light emitting unit located at an other end of the row.

3. The information display device according to Claim 1, further comprising
an obtaining unit configured to obtain period information indicating a length of the shutter open period,
wherein each of said light emitting units is configured to emit light so that the light-up state is included at least once during the shutter open period indicated in the period information obtained by said obtaining unit.

4. A reproduction device which reproduces a stereoscopic image, said reproduction device comprising:
the information display device according to Claim 1; and
an image output unit configured to output a stereoscopic image signal indicating the stereoscopic image, to a stereoscopic image display device connected to said reproduction device.

5. A stereoscopic image display device comprising:
the information display device according to Claim 1;
a receiving unit configured to receive a stereoscopic image signal indicating the stereoscopic image; and
an image display unit configured to display the stereoscopic image indicated by the stereoscopic image signal received by said receiving unit.

6. An information display method executed by an information display device to be included in a device which outputs stereoscopic images in which an image for the right eye and an image for the left eye are arranged alternately in chronological order,
the information display device including
a display unit which has a plurality of light emitting units, and is configured to display information using the light emitting units each of which is configured to alternate between a light-up state and a light-out state, the light-up state lasting from a start of a light emission of the light emitting unit to an end of the light emission, the light-out state lasting from the end of the light emission to a start of a next light emission,
said information display method comprising:
starting a light emission for each of the light emitting units during a shutter open period from when a shutter included in eyeglasses used for viewing the stereoscopic images is opened to when the shutter is closed, the shutter being for one of the right and left eyes; and
ending the light emission for each of the light emitting units, during the shutter open period, at a conclusion of a predetermined elapsed period after the start of the light emission.
